# EUROPEAN PATENT APPLICATION

(11) **EP 2 629 256 A1**
(43) Date of publication of application: **21.08.2013**
(21) Application number: 13275036.5
(22) Date of filing: 18.02.2013
(51) Int. Cl.: G06Q 20/12, G06Q 20/16, G06Q 20/38, G06Q 20/02, G06Q 20/42, G06Q 20/40

(54) **Method for verifying the authenticity of the source of data**

(30) Priority: 17.02.2012 GB 201202772
(71) Applicant: Raja, Elendra, Bolton BL6 6PE (GB)
(72) Inventor: Raja, Elendra, Bolton BL6 6PE (GB)
(74) Representative: Wilson Gunn

(57) **Abstract**

A method of verifying the authenticity of a data source. The method has the steps of an operator receiving data from a data source; the operator entering the data onto a data transmission system; using the data transmission system to contact a verifying party for verification purposes; and establishing communication between the data source and the verifying party so that the verifying party can request verification information from the data source to verify the authenticity of the data source.

## Description

The present invention relates to a method for verifying the authenticity of the source of data.

Fraud is a serious issue in modern society. Fraudsters are developing ever more sophisticated ways of exploiting people to try and obtain or make use of individual's assets for ill gotten gains. One particular instance of fraud is the unauthorised acquisition and use of an individual's payment card details to purchase products or services. Such payments may be made via the internet, in person or over the telephone or via any other method of payment made available by a merchant. When such fraudulent transactions take place, the liability often rests with the merchant for allowing the transaction to go through and so the merchant bears the cost of the transaction.

Banks and payment providers take fraud very seriously and have therefore tried to develop ways of combating fraud to safeguard their customer's assets. For example, when an individual makes a purchase using a payment card in person at a merchant with chip and pin facilities, the individual must insert their credit or debit card into a chip and pin terminal and input their card pin number to authorise the transaction. Since the card pin number is only supposed to be known by the card holder, such a transaction is assumed by the bank to be authentic and made by the card holder. As information has been provided which is known only to the card holder, liability for the transaction shifts from the merchant taking the payment to the bank. This is generally known as liability shift and safeguards the merchant from fraud.

Liability shift has also been implemented for online transactions. Visa®, for example, has introduced its Verified by Visa system which is a password-protected identity checking service for online based transactions. The system requires the card holder to register a verification password with the card issuer which is known only to the card holder. When making an online transaction, in addition to the card holder's personal details, the card holder usually inputs the card number, the expiry date and the CVV number found on the back of the card. When the customer submits the order, the card holder is prompted to enter particular characters from the verification password to verify that it is the card holder that is authorising the transaction. A positive verification result is associated with the transaction data and the data is transmitted from the merchant to the bank to complete the transaction. The process of providing information known only to the card holder results in liability shift from the merchant to the bank.

Another common form of remote transaction is via the telephone. Such a transaction involves the customer telephoning the merchant with details of the product or service the customer wishes to purchase. To complete the transaction and make a payment by payment card the customer must provide its personal details, card number, card expiry and CVV number, as with an online transaction. A problem with such transactions is that it is difficult to verify the identity of the card holder because verification normally involves the provision of information to the bank known only to the card holder. Such information cannot therefore be disclosed to the merchant because it would compromise the secrecy of the card holder's verification information and potentially expose the card holder to fraud. Consequently, liability shift cannot currently be achieved with telephone orders and so liability for fraudulent transactions rests with the merchant.

Solutions to this problem have been proposed. One solution involves providing the card holder with a pocket size card reader which generates a random pin for verification purposes. Problems with this solution include that the card reader can be lost, forgotten or damaged and it can be inconvenient to carry around. Another solution is to provide an automated phone system which removes the human element from the merchant side of the transaction so that the customer can disclose verification information without compromising its secrecy. Such systems are unreliable and susceptible to unwanted downtime.

An object of embodiments of the invention is to provide a reliable system for payment verification in respect of telephone transactions and so enable liability for the transaction to be shifted from the merchant to the bank.

According to a first aspect of the present invention, there is provided a method of verifying the authenticity of a data source comprising the steps of:
an operator receiving data from a data source;
the operator entering the data onto a data transmission system;
using the data transmission system to contact a verifying party for verification purposes; and
establishing communication between the data source and the verifying party so that the verifying party can request verification information from the data source to verify the authenticity of the data source.

Advantageously, by verifying the authenticity of the data source, for example a customer of a merchant, it is possible for a card issuer to infer that the owner of that data has authorised a transaction with the merchant for an order that was initially placed offline. Since the card issuer is satisfied that the rightful owner of the payment information has authorised a transaction with the merchant, liability for the transaction is shifted from the merchant to the card issuer.

The data may be received by the operator from the data source verbally. The data may be received by the operator from the data source in written form.

The data transmission system may comprise a computer and/or a server for the storage of data. The data may be stored locally or remotely over a network.

The data may be received from the data source by the operator via a different form of communication from which the verifying party is contacted.

The data may be transmitted by the data transmission system to a data processing party. The transmission of data using the data transmission system may be initiated by the data source. Alternatively, the transmission of data using the data transmission system may be initiated by the operator.

The step of establishing communication between the data source and the verifying party may be initiated by the data source or the operator. Alternatively, the step of establishing communication between the data source and the verifying party may be initiated by the verifying party.

The method may comprise the additional step of retrieving data provided by the data source. The method may comprise the additional step of presenting the retrieved data to the data source. The data provided by the data source may be identified and retrieved using a means of identification which comprises a part of or is associated with the data provided by the data source. The means of identification may comprise an identification code. The identification code may be generated by a random code generator. The method may comprise the additional step of communicating the means of identification to the data source.

The method may comprise the additional step of entering the means of identification into an input means to enable the data of the data source to be identified and retrieved. The input means may comprise a device with an internet connection. The input means may comprise software that enables the means of identification to be entered and transmitted to the data transmission system. The software may comprise one or more web pages accessible to the data source via the device. The software may comprise a system designed to permit the device to communicate with other devices over a network. The software may comprise an application to permit the data source to interface with the device. The software may be adapted to retrieve data from other devices and display the data on the device of the data source via the application.

The method may comprise the additional step of comparing the entered means of identification with stored means of identification to identify the data provided by the data source. The step of comparing may comprise the use of a comparison means.

The retrieved data may be identified by the data source as that of the data source by checking that at least some of the retrieved data corresponds to the data given to the operator or vice versa. The checked data may comprise the price of a product and/or the name of the data source.

The software may be the comparison means. The software may be coded to store the inputted means of identification as a variable and to compare the inputted means of identification with other stored means of identification to identify the data provided by the data source. The software may be coded to retrieve and display the identified data on the device of the data source.

The device may be a personal computer or smart phone capable of connecting to the internet and viewing web pages and/or running applications. The display means may comprise at least a part of the device used for inputting the identification means.

The operator may be a sales assistant at a merchant. The data source may be a customer of the merchant. The verifying party may be a card issuer. The verifying party may hold verification information known only to the verifying party and the data source. The data processing party may be an acquiring bank. The acquiring bank may transmit the data to a card scheme for payment authorisation. The data from the data source may be transmitted to the verifying party and/or the data processing party from the merchant via an intermediary. The intermediary may be a payment service provider.

The data may comprise payment information. The data may comprise order details. The verifying party may transmit an authorisation code to the merchant when the identity of the customer has been verified and the payment confirmed.

In one embodiment, the method comprises the step of receiving payment details from a customer to be entered by a sales assistant at a merchant on to a data transmission system, transmitting payment details to a bank and establishing communication between the bank and the customer to enable the credentials of the customer to be verified.

According to a second aspect of the present invention, there is provided a method of retrieving data comprising the steps of:
an operator receiving data from a data source;
the operator entering the data onto a data transmission system;
the data transmission system generating a means of identification which is associated with the data;
the operator communicating the means of identification to the data source; and
the data source entering the means of identification into a communication device and transmitting the means of identification to the data transmission system so that the data can be identified and retrieved from the data transmission system and displayed on the communication device.

The method may further comprise the step of the data source transmitting payment information to the data transmission system from the communication device. Alternatively, the data received from the data source by the operator may comprise payment information. The data may comprise details of an order for a product or service.

In order that the invention may be more clearly understood embodiments thereof will now be described, by way of example, with reference to the accompanying drawings of which:

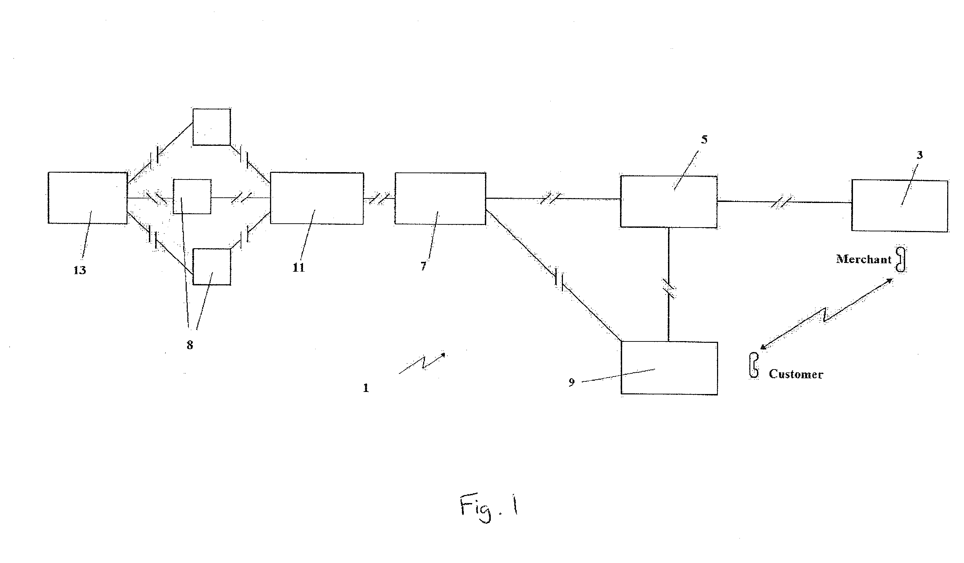

Fig. 1 shows a block diagram of a system according to the invention; and

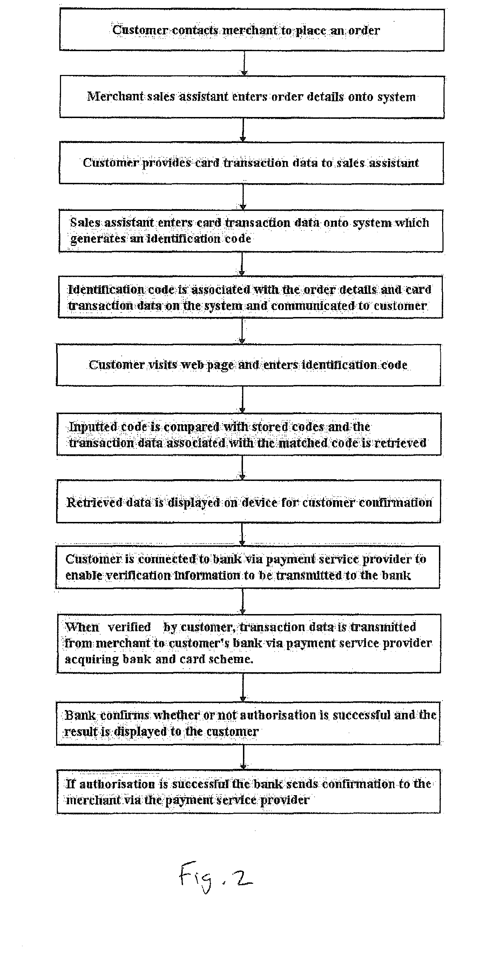

Fig. 2 shows a flowchart depicting a series of method steps according to the invention.

Referring to the drawings there is shown a system 1 comprising a computer terminal 3 having software which enables order details and card transaction data to be entered and stored by a merchant sales assistant. The computer terminal 3 is connected to a server 5 which has a hard drive acting as a storage means for the order details and associated card transaction data which are stored on a database. The server 5 has a secure internet connection to a payment service provider 7 which is capable of accepting a variety of payment methods such as credit cards, direct debits, PayPal® transactions and direct bank transfers. The payment service provider 7 is capable of connecting to a merchant's acquiring bank 11 which exchanges funds with customers' issuing banks 13 on behalf of the merchant. The acquiring bank 11 is capable of corresponding with various different card schemes 8 such as Visa, MasterCard and American Express to enable payments between the acquiring bank 11 and the customers' issuing banks to be actioned. The payment service provider 7, acquiring bank 11 and card schemes 8 together enable card transaction data to be transmitted from the merchant 5 to the appropriate issuing bank 13 for authentication purposes so that payment from the customer to the merchant can be authorised.

The card transaction data comprises a customer's card number, card holder name as it appears on the card, expiry date of the card, card holder address details, and may also comprise the issue number and start date of the card (if present) and the card security code found on the back of the card. The order details comprise the customer details including name and address and the item(s) being ordered. When entered and stored on the system, the customer order details and transaction data are associated with one another so that the correct payment may be taken for the correct goods.

The system 1 further comprises software stored on the server capable of generating a random identification code. The identification code is generated when the merchant sales assistant enters the card transaction data received from the customer onto the system 1 to be stored on the server 5 together with the order details. When the identification code is generated, it is displayed on the merchant sales assistant computer terminal 3 and is also associated with the order on the database stored on the server for identification purposes.

The system 1 also comprises a series of web pages stored on a server for connecting the customer to the bank via a secure internet connection so that the order can be completed. Each of the web pages in the series may be accessed via any fixed or portable device 9 capable of an internet connection. The first web page of the series comprises an input field to enable the identification code to be entered and a submit button to enable the customer to submit the code for storage as a variable. The submit button comprises a link to a second web page which is adapted to retrieve data from the server 5 based upon the submitted identification code. By comparing the user entered identification code with those codes stored on the database the order details and transaction data associated with the submitted identification code may be retrieved and displayed on the customer's device. The second web page also comprises a submit button which enables the customer, subject to his/her approval of the order details, to proceed to the next stage of the order process. The customer's approval will depend in part on whether the displayed order value and the customer name are correct.

The submit button of the second web page triggers the payment authorisation process and directs the user to a third web page which has verification fields displayed by the bank 13. In respect of the Verified by Visa verification system, the verification fields comprise three input boxes and the web page provides instructions for the customer to enter three separate characters from his/her secret security password into each box respectively. The third web page also comprises a submit button to enable the customer to submit the security information to the bank for verification purposes. Upon verification, the transaction data is transmitted from the merchant to the issuing bank 13 via the payment service provide 7, acquiring bank 11 and card scheme 8 of the customer's issuer 13. The submit button links to a fourth web page in the series which comprises means for displaying the result of the authentication procedure and whether or not the order has been accepted and authorised. An authenticated transaction prompts the card scheme 8 to send an authorisation code to the merchant via the acquiring bank 11 and payment service provider 7 which is then stored on the database and associated with the order in question.

In use, a customer that has decided upon a product or service he/she would like to purchase contacts the merchant product or service provider by phone. The customer is put in contact with a sales adviser who has access to a computer terminal 3. The sales adviser obtains the order details from the customer, requests card payment details and any other information required for identification and contact purposes. Once obtained, the sales adviser enters the order details and payment details onto the system 1 via the computer terminal 3. The entered information is transmitted to the server 5 and stored on a database.

Submission of the card transaction data onto the system I prompts the identification code generator to generate a random identification code which is displayed on the sales adviser's computer terminal 3 and which is stored and associated with the stored transaction and order data on the database. The sales adviser communicates the identification code and a web address (corresponding to the first web page) to the customer and directs the customer to visit the web page via a fixed or portable device 9 having an internet connection and to enter the identification code into the input field provided.

The customer, on instruction, enters the identification code and submits it to the server 5 using the submit button. The web page stores the identification code as a variable and compares the variable with identification codes stored on the database until the identical identification code is determined. Matching the submitted code with the stored code enables the web page to retrieve the associated order information from the server and display the information on the second web page on the customer's device 9. The customer reviews the order information including product and price details and, when satisfied it is correct, indicates a desire to proceed by activating the submit button. The submit button prompts the web page to activate the process of transmitting the transaction data from the server 5 to the customer's bank 13 via the payment service provider 7, acquiring bank 11 and card scheme 8. The customer is then directed to the third web page which displays the verification fields retrieved from the bank 13. In this way, the customer is put in contact with the bank's servers and the merchant has no intermediary role in the transmission of data.

The customer is prompted by the third web page to enter particular characters from his/her security password. For example, if the password comprises ten characters the customer may be prompted to enter the first, third and seventh characters. Once entered, the customer activates the submit button and the security information is transmitted securely over an encrypted internet connection to the bank 13. The bank 13 compares the submitted information with the stored information of the card holder (assumed to be the customer) and transmits a positive or negative result back to the merchant's server 5. A positive verification result is attached to the transaction data which is then transmitted to the merchant's payment service provider 7, acquiring bank 11 and card scheme 8 so that the transaction can be authenticated and authorised. If authenticated and the transaction is authorised, the positive result is displayed on the fourth web page and the order is complete. When authenticated, the payment is transferred from the customer's issuing bank 13 to the merchant's bank account and an authorisation code is transmitted to the merchant to be stored together with the order details on the database. The verification procedure enables liability to be shifted from the merchant to the bank for telephone orders.

Reference to bank means reference to any payment provider with a verification procedure. Such a verification procedure does not have to involve the provision by the customer of selected characters from a security password. It may, for example, involve a security question the answer to which is known only by the customer. PayPal® uses such a system. The above system could therefore be used with the PayPal payment service in the same way by obtaining the customer's PayPal payment details, providing an identification code which, when entered and submitted by the customer transmits the transaction details to PayPal and prompts PayPal to verify the identity of the customer with its security question, thereby giving rise to liability shift.

In an alternative embodiment, for added security, the customer's payment information is not provided to the sales assistant over the phone. Only the order details are provided to be entered onto the server 5 via the computer terminal 3. Entry of the order details generates the identification code which is then communicated to the customer. Entry of the identification code into the first web page retrieves and displays the order details on the second web page which also includes fields for the input of payment information such as card number and CVV number which, when submitted, are transmitted and stored on the server 5. The customer is therefore able to securely enter its payment information without having to disclose it to a sales assistant. Submission of the order then follows substantially the same process as the first embodiment with a verification request from the issuing bank 13 and transmission of transaction data to the card scheme 8 via the payment service provider 7 and acquiring bank 11.

It is of course to be understood that the above embodiment has been described by way of example only and that many variations are possible without departing from the scope of the invention.

## Claims

1. A method of verifying the authenticity of a data source comprising the steps of:
an operator receiving data from a data source;
the operator entering the data onto a data transmission system;
using the data transmission system to contact a verifying party for verification purposes; and
establishing communication between the data source and the verifying party so that the verifying party can request verification information from the data source to verify the authenticity of the data source.

2. A method as claimed in claim 1, wherein the data is received by the operator from the data source verbally or in written form.

3. A method as claimed in any preceding claim, wherein the data transmission system comprises a computer and/or a server for the storage of data.

4. A method as claimed in any preceding claim, wherein the data is received from the data source by the operator via a different form of communication from which the verifying party is contacted.

5. A method as claimed in any preceding claim, wherein the transmission of data using the data transmission system is initiated by the data source or by the operator.

6. A method as claimed in any preceding claim, wherein the step of establishing communication between the data source and the verifying party is initiated by the data source or the operator or the verifying party.

7. A method as claimed in any preceding claim, further comprising step of retrieving data provided by the data source.

8. A method as claimed in claim 7, further comprising the step of presenting the retrieved data to the data source.

9. A method as claimed in claim 7 or claim 8, wherein the data provided by the data source is identified and retrieved using a means of identification which comprises a part of or is associated with the data provided by the data source.

10. A method as claimed in claim 9, wherein the means of identification comprises an identification code.

11. A method as claimed in claim 10, wherein the identification code is generated by a random code generator.

12. A method as claimed in any of claims 8 to 11, further comprising the step of communicating the means of identification to the data source.

13. A method as claimed in claim 12, further comprising the step of entering the means of identification into an input means to enable the data of the data source to be identified and retrieved.

14. A method as claimed in claim 13, comprising the additional step of comparing the entered means of identification with stored means of identification to identify the data provided by the data source.

15. A method as claimed in any preceding claim, comprising the step of receiving payment details from a customer to be entered by a sales assistant at a merchant on to a data transmission system, transmitting payment details to a bank and establishing communication between the bank and the customer to enable the credentials of the customer to be verified.
